(19) Europäisches Patentamt
European Patent Office
Office européen des brevets

(11) Veröffentlichungsnummer: **0 019 197**
**B1**

(12) # EUROPÄISCHE PATENTSCHRIFT

(45) Veröffentlichungstag der Patentschrift: **12.10.83**

(51) Int. Cl.³: **C 08 F 14/06**, C 23 F 15/00, C 07 D 279/18

(21) Anmeldenummer: **80102479.5**

(22) Anmeldetag: **07.05.80**

(54) **Verfahren zur Herstellung von Vinylchlorid-Polymerisaten, Mittel zur Beschichtung von Polymerisationsgefässen sowie das damit beschichtete Polymerisationsgefäss.**

(30) Priorität: **12.05.79 DE 2919197**

(43) Veröffentlichungstag der Anmeldung: **26.11.80 Patentblatt 80/24**

(45) Bekanntmachung des Hinweises auf die Patenterteilung: **12.10.83 Patentblatt 83/41**

(84) Benannte Vertragsstaaten: **BE CH DE FR GB IT LI NL SE**

(56) Entgegenhaltungen:
**DE-A-1 030 302**
**DE-A-2 044 259**
**FR-A-1 242 850**
**FR-A-2 205 554**
**GB-A-2 002 517**
**JACS 74 (1952) S. 573–586**

(73) Patentinhaber: **HOECHST AKTIENGESELLSCHAFT, Postfach 80 03 20, D-6230 Frankfurt am Main 80 (DE)**

(72) Erfinder: **Fischer, Edgar, Dr., Assmannshäuser Weg 8, D-6000 Frankfurt am Main 71 (DE)**
Erfinder: **Brandrup, Johannes, Dr., Am Allersberg 6, D-6200 Wiesbaden (DE)**
Erfinder: **Weinlich, Jürgen, Dr., Eichenweg 1, D-6239 Eppstein/Taunus (DE)**

EP 0 019 197 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verfahren zur Herstellung von Vinylchlorid-Polymerisaten, Mittel zur Beschichtung von Polymerisationsgefässen sowie das damit beschichtete Polymerisationsgefäss

Bei der Herstellung von Vinylchlorid-Polymerisaten durch Polymerisation in wässrigem Medium bilden sich im Verlauf der Polymerisation an der Innenwand der Polymerisationsautoklaven sowie an den Einbauten Polymerisatbeläge. Durch diese Beläge wird die Polymerisatausbeute vermindert und die Qualität des Produktes verschlechtert, da die Verkrustungen teilweise abfallen und in das Endprodukt gelangen und dort zu Stippen oder «Fischaugen» führen. Die Beläge behindern ausserdem die Abfuhr der Polymerisationswärme durch die Reaktorwandungen, wodurch unwirtschaftliche, lange Reaktionszeiten in Kauf genommen werden müssen.

Die Entfernung derartiger Beläge ist daher unumgänglich, was üblicherweise auf mechanischem Wege geschieht. Hierfür werden zumeist Druckwasser-Ausspritzgeräte verwendet, die jedoch nur die leicht haftenden Wandabscheidungen entfernen. Daher muss der Reaktor jeweils nach wenigen Ansätzen unter aufwendigen Sicherheitsvorkehrungen bestiegen und zusätzlich von Hand mittels Spachtel gereinigt werden. Diese Reinigungsarbeiten sind arbeitsintensiv und kostspielig, verursachen lange Stillstandzeiten und vermindern somit die Wirtschaftlichkeit des Verfahrens beträchtlich.

Es hat daher nicht an Versuchen gefehlt, derartige Polymerisatbeläge bei der Herstellung von Vinylchloridpolymerisaten in wässriger Dispersion zu vermindern oder gleich zu vermeiden. Eine allseits befriedigende Lösung des Problems wurde aber noch nicht erreicht.

Von den zahlreichen bekannten Verfahren bezwecken einige durch verfahrenstechnische Massnahmen die Belagsbildung zu vermindern. Beispielsweise seien hier genannt: das Abstreifen der Wände des Reaktors mit einem entsprechend ausgebildeten Rührer, die Einregulierung der Wandtemperatur auf mindestens die Temperatur des Reaktionsmediums, die Kühlung der Reaktorwand auf −15 bis 0 °C, das Zuführen wässriger Lösungen, beispielsweise von Salzen der Permangansäure, Chromsäure oder Dichromsäure während der Polymerisation an der Grenzfläche zwischen Flüssigkeit und Gasphase, die Polymerisation unter Durchleiten eines elektrischen Stromes durch das flüssige Reaktionsmedium usw.

Bei anderen bekannten Verfahren werden die Komponenten des Polymerisationsrezeptes verändert und/oder der Polymerisationsflotte weitere Stoffe zugesetzt.

Weitere bekannte Verfahren verwenden zur Belagsunterdrückung Reaktoren mit besonders ausgebildeten bzw. beschichteten Innenwänden, z.B. solche mit einer Rauhtiefe der Wand von weniger als 10 µm zusammen mit wasserlöslichen, reduzierenden anorganischen Salzen und bestimmten Rührgeschwindigkeiten; oder eine unlösliche Wandbeschichtung aus einem vernetzten polymeren Material, das polare Gruppen enthält und mit einem Aldehyd als Vernetzungskomponente hergestellt wurde; oder einen Wandüberzug der überwiegend aus Polyäthylenimin besteht, das mit einem Harnstoff, Aldehyd bzw. Diisocyanat gehärtet wurde, wobei dem Polymerisationsmedium ausserdem ein zweiwertiges Zinnsalz einer anorganischen Säure als Inhibitor zugesetzt werden kann. Weiterhin sind auch Wandbeschichtungen mit polyaromatischen Aminen oder mit speziellen Benzothiazol-2-on-hydrazon-Derivaten beschrieben worden.

Zu erwähnen ist hier auch die DE-OS 2 044 259, in der die Lehre gegeben wird, u.a. organische Farbstoffe als belagsunterdrückende Mittel einzusetzen. Neben einer grossen Zahl anderer Vertreter werden hierbei auch ganz allgemein Thiazin-Farbstoffe erwähnt. Als konkrete Vertreter dieser umfangreichen Farbstoffklasse wird nur Methylenblau offenbart.

Aus der EU-Pa 0 000 166 war es schliesslich schon bekannt, Farbstoffe mit löslich machenden Gruppen wie –COOH– oder $SO_3H$-Gruppen als solche oder als Salze aus wässriger Lösung zum Zwecke der Belagsunterdrückung auf die Reaktorwandungen aufzubringen. In der gleichen Patentanmeldung werden hierfür auch wasserlösliche, ionische Farbstoffe mit einem heterocyclischen Ring-System vorgeschlagen.

Die bisher für die Belagsunterdrückung bei der Vinylchlorid-Polymerisation bekannten Materialien sind keineswegs voll befriedigend. So sind sie beispielsweise nicht universell einsetzbar, mit der Folge, dass sie nicht bei allen gängigen PVC-Typen, speziell solchen mit niedrigem Molekulargewicht, verwendet werden können oder dass in manchen Fällen erst die Rezepturen speziell auf diese Stoffe abgestimmt werden müssen. Eine ganze Reihe der Wirksubstanzen muss weiterhin in einem organischen Lösungsmittel eingesetzt werden, oder es müssen wegen zu geringer Effektivität Lösungen mit vergleichsweise hohem Gehalt von z.B. mehr als 0,1% angewendet werden, um eine befriedigende Wirkung zu erzielen. Zusätzlich zeigen viele dieser Substanzen auch noch eine unerwünschte retardierende Wirkung auf die Polymerisation. Um diesen Nachteil zu vermeiden, ist es nötig, nach der Wandbehandlung mit diesen Substanzen sorgfältig nachzuspülen, um eine Beeinflussung der Polymerisation durch das überschüssige Antibelagsreagenz zu verhindern. Eine sich daraus ergebende Forderung ist eine hohe Wandaffinität der jeweiligen Substanz, so dass trotz sorgfältigen Nachspülens noch genügend Wirksamkeit auf der Wand vorhanden ist.

Aufgabe der vorliegenden Erfindung war es daher, ein Verfahren zur Herstellung von Vinylchlorid-Polymerisaten bereitzustellen, welches die Nachteile des Standes der Technik nicht besitzt bzw. welches bei der kombinierten Betrachtung obiger Punkte Vorteile gegenüber den bekannten Verfahren aufweist und bei welchem insbesondere belagsverhindernde Substanzen eingesetzt werden, die eine hohe und zeitlich langandauernde belagsverhindernde Wirkung aufweisen und auch bei der Copolymerisation von Vinylchlorid genügend wirksam sind.

Diese Aufgabe wird erfindungsgemäss dadurch gelöst, dass die Polymerisation in einem Reaktor durchgeführt wird, dessen Innenteile und dessen Einbauten teilweise oder ganz mit einem Überzug versehen sind, der aus bestimmten, wasserlöslichen Thiazinfarbstoffen besteht.

Die vorliegende Erfindung betrifft daher ein Verfahren zur Herstellung von Vinylchlorid-Homo-, -Co- oder Pfropfpolymerisaten, die mindestens 50 Gew.-% polymerisierte Vinylchlorideinheiten enthalten, durch Polymerisation des Monomeren oder Monomerengemisches in wässriger Dispersion mit radikalbildenden Katalysatoren, gegebenenfalls Suspensionsstabilisatoren, Emulgatoren und weiteren Polymerisationshilfsstoffen, dadurch gekennzeichnet, dass die Polymerisation in einem Reaktor durchgeführt wird, dessen Innenwände und dessen übrige Teile, an denen sich Polymerablagerungen bilden können, ganz oder teilweise mit einem Überzug versehen sind, der Verbindungen der allgemeinen Formel

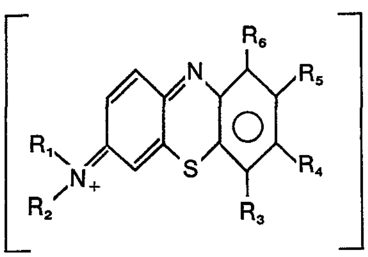 $X^-$

enthält, in der die einzelnen Substituenten folgendes bedeuten:

$R_1$, $R_2$ = H; gesättigter Kohlenwasserstoffrest mit 1 bis 8 C-Atomen, vorzugsweise aliphatischer Kohlenwasserstoffrest mit 1 bis 6 C-Atomen;

$R_3$, $R_5$ = H; gesättigter Kohlenwasserstoffrest mit 1 bis 8 C-Atomen, vorzugsweise aliphatischer Kohlenwasserstoffrest mit 1 bis 6 C-Atomen; OH; O-gesättigter Kohlenwasserstoffrest mit 1 bis 8 C-Atomen, vorzugsweise O-aliphatischer Kohlenwasserstoffrest mit 1 bis 6 C-Atomen; $-N<^{R'}_{R''}$;

$R_4$ = OH; $N<^{R'}_{R''}$; $-\underset{H}{N}-SO_2$-Aromat, vorzugsweise isocyclisch mit 6 bis 10 C-Atomen, gegebenenfalls substituiert mit Resten $R_1/R_2$;

$R_6$ = OH; $-\underset{H}{N}-SO_2$-Aromat, vorzugsweise isocyclisch mit 6 bis 10 C-Atomen, gegebenenfalls substituiert mit Resten $R_1/R_2$, sofern $R_4$ nicht schon diesen Substituenten darstellt; oder

$R_5$ und $R_6$ = zusammen Pyridin oder einen isocyclischen oder heterocyclischen Aromat mit 6 bis 10 C-Atomen, gegebenenfalls substituiert mit Resten $R_1/R_2$;

wobei jedoch mindestens einer der Reste $R_3$ bis $R_6$ OH darstellt; $R' = R_1/R_2$;

$R'' = R_1/R_2$; zusätzlich Aromat, vorzugsweise isocyclisch mit 6 bis 10 Kohlenstoffatomen, gegebenenfalls substituiert durch eine oder mehrere Gruppen entsprechend $R_1/R_2$, O-gesättigter Kohlenwasserstoffrest mit 1 bis 8 C-Atomen; OH; COOH; $CON<^{H}_{H}$, $SO_3H$, $SO_2N<^{H}_{H}$, $N<^{R^{III}}_{R^{IV}}$, ($R^{III}$, $R^{IV}$ = H oder $C_1$–$C_6$-Alkyl)

X = beliebiges einwertiges Anion oder ein entsprechendes Anionäquivalent.

Weiterhin betrifft die Erfindung ein Polymerisationsgefäss, dessen Innenwände und übrige Teile, an denen sich Polymerisatablagerungen bilden können, ganz oder teilweise mit vorstehendem Beschichtungssystem überzogen sind.

Ein weiterer Gegenstand vorliegender Erfindung sind schliesslich die Verbindungen obiger allgemeiner Formel selbst sowie belagsverhindernde Substanzen, welche obige Verbindungen enthalten.

Das Anion $X^-$ ist für die Wirksamkeit der erfindungsgemässen Substanzen nicht entscheidend und kann daher beliebiger Natur sein. Nur beispielhaft seien hierfür genannt: $Halogen^-$, vorzugsweise $Cl^-$ und $Br^-$, $OH^-$, $(SO_4^{-2})_{½}$, $NO_3^-$, $(PO_4^{-3})_{1/3}$, $R'''-COO^-$, ($R'''$ = $C_{1-5}$Alkyl, Aryl), $R^{IV}$ $-SO_3$ ($R^{IV}$ = Aryl $C_{6-10}$), $\left(\begin{smallmatrix}COO^-\\COO^-\end{smallmatrix}\right)_{½}$ usw.

In obiger allgemeiner Formel bedeuten vorzugsweise:

$R_1$, $R_2$ = H; $C_1$–$C_4$-Alkyl;
$R_3$ = H; OH;
$R_4$ oder $R_5$ = OH; $-N<^{R'}_{R''}$;

$R'$ = H; $C_{1-6}$-Alkyl wie Methyl, Äthyl, Propyl, Butyl, i-Butyl;

$R''$ = H; $C_{1-6}$-Alkyl, aromatischer isocyclischer Kohlenwasserstoffrest mit 6 bis 10 C-Atomen, insbesondere Phenyl oder Toluoyl, gegebenenfalls substituiert durch OH–, COOH–, $-CON<^{H}_{H}$, $SO_3H$, $SO_2N<^{H}_{H}$ oder $-N<^{H}_{H}$-Gruppen

$R_6$ = OH; $-\underset{H}{N}-SO_2$-Aromat (isocycl.) mit 6 bis 10 C-Atomen, insbesondere Phenyl oder Toluoyl, gegebenenfalls substituiert mit Resten $R_1/R_2$.

Bevorzugte Vertreter sind auch Verbindungen, bei denen $R_5$ und $R_6$ Teile eines aromatischen (isocycl. oder heterocycl.) Ringes, vorzugsweise eines Pyridinringes sind und $R_3$ für H oder OH und $R_4$ für OH oder $-N<^{R'}_{R''}$, mit $R''$ insbesondere Phenyl oder Toluoyl steht. Das N-Atom in dem Pyridinring liegt dabei vorzugsweise so, dass $R_5$ mit dessen N-Atom beginnt. Besonders vorteilhaft ist in diesem Fall $R_4$ gleich OH.

Sind $R_5$ und $R_6$ nicht Teile eines Ringes, so werden besonders günstige Ergebnisse mit Verbindungen obiger allgemeiner Formel erhalten mit

$R_1$, $R_2$ = $C_{1-4}$-Alkyl;

$R_3$ = H; OH;

$R_4$ = OH; $NH_2$; $-N{<}^{R'}_{R''}$, mit R″ insbesondere Phenyl oder Toluoyl;

$R_5$ = H; OH;

$R_6$ = OH; $-\underset{H}{N}-SO_2$-Aromat (isocycl.) mit 6–10 C-Atomen, gegebenenfalls substituiert mit Resten $R_1/R_2$.

Eine grössere Zahl der erfindungsgemässen Verbindungen, die sich durch eine besonders hohe Wandaffinität auszeichnen, besitzen folgendes gemeinsames Strukturprinzip:

oder 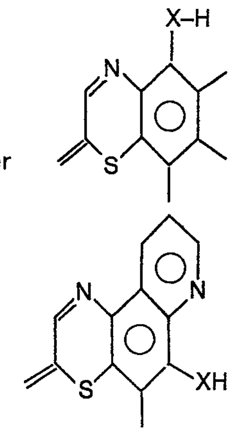

X = O oder N–$SO_2$Aromat

X = wie vorstehend

Einige typische Vertreter von Verbindungen der obigen allgemeinen Formel sind in der nachfolgenden Tabelle I aufgeführt.

Tabelle I

| Formel | Substituenten | |
|---|---|---|
| 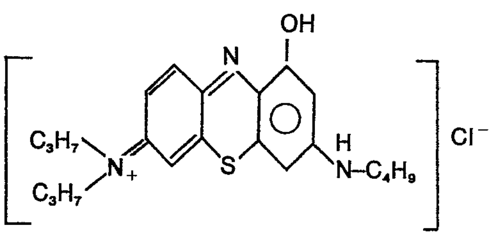 | $R_1 = R_2 = C_3H_7$<br>$R_3$ = H<br>$R_4 = N{<}^{R'}_{R''}$<br>$R_5$ = H | $R_6$ = OH<br>X = $Cl^-$<br>R′ = H<br>R″ = $C_4H_9$ |
| 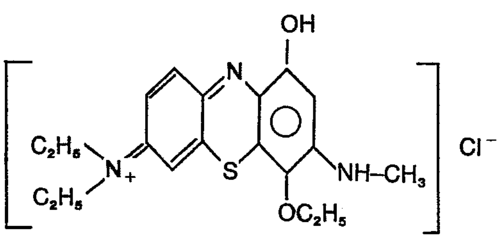 | $R_1 = R_2 = C_2H_5$<br>$R_3 = OC_2H_5$<br>$R_4 = N{<}^{R'}_{R''}$<br>$R_5$ = H | $R_6$ = OH<br>X = $Cl^-$<br>R′ = H<br>R″$CH_3$ |
| 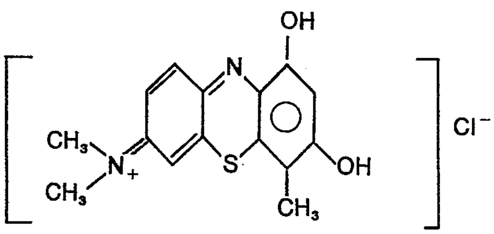 | $R_1 = R_2 = CH_3$<br>$R_3 = CH_3$<br>$R_4$ = OH | $R_5$ = H<br>$R_6$ = OH<br>X = $Cl^-$ |
| 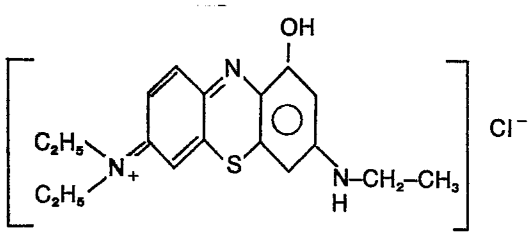 | $R_1 = R_2 = C_2H_5$<br>$R_3$ = H<br>$R_4 = \underset{H}{N}-CH_2CH_3$ | $R_5$ = H<br>$R_6$ = OH<br>X = $Cl^-$ |
| 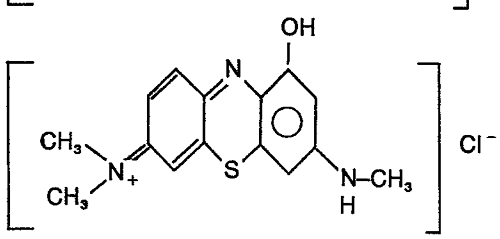 | $R_1 = R_2 = CH_3$<br>$R_3$ = H<br>$R_4 = \underset{H}{N}-CH_3$ | $R_5$ = H<br>$R_6$ = OH<br>X = $Cl^-$ |

Tabelle I (Fortsetzung)

| Formel | | Substituenten | |
|---|---|---|---|
| 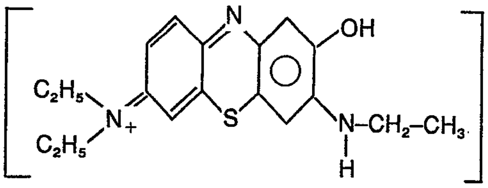 | $Cl^-$ | $R_1 = R_2 = C_2H_5$<br>$R_3 = H$<br>$R_4 = N(H){-}CH_2{-}CH_3$ | $R_5 = OH$<br>$R_6 = H$<br>$X = Cl^-$ |
| 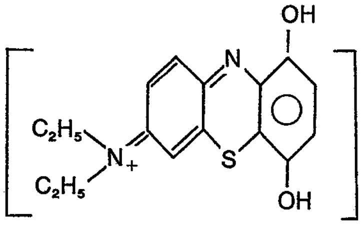 | $Cl^-$ | $R_1 = R_2 = C_2H_5$<br>$R_3 = OH$<br>$R_4 = H$ | $R_5 = H$<br>$R_6 = OH$<br>$X = Cl^-$ |
| 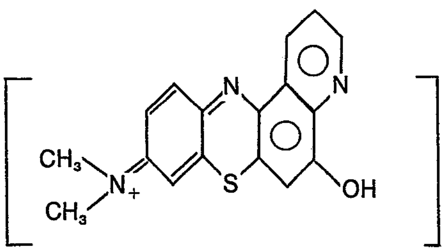 | $Cl^-$ | $R^1 = R^2 = CH_3$<br>$R_3 = H$<br>$R_4 = OH$ | $R_5 + R_6 =$ 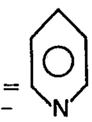<br>$X = Cl^-$ |
| 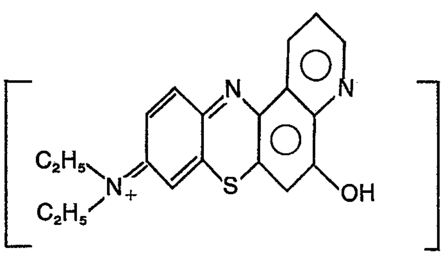 | $Cl^-$ | $R_1 = R_2 = C_2H_5$<br>$R_3 = H$<br>$R_4 = OH$ | $R_5 + R_6 =$ 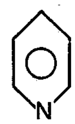<br>$X = Cl^-$ |
| 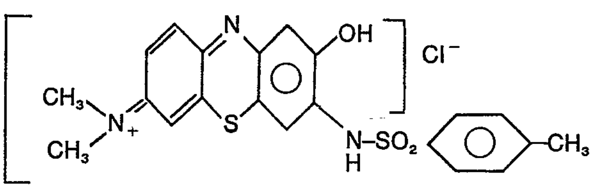 | $Cl^-$ | $R_1 = R_2 = CH_3$<br>$R_3 = H$<br>$R_4 = N(H){-}SO_2{-}$ 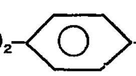 $-CH_3$ | $R_5 = OH$<br>$R_6 = H$<br>$X = Cl^-$ |
| 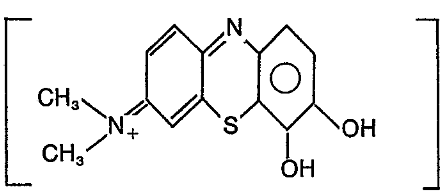 | $\left(\begin{matrix}COO^- \\ \vert \\ COO^-\end{matrix}\right)$ 1/2 | $R_1 = R_2 = CH_3$<br>$R_3 = OH$<br>$R_4 = OH$ | $R_5 = H$<br>$R_6 = H$<br>$X = \left(\begin{matrix}COO^- \\ \vert \\ COO^-\end{matrix}\right)$ 1/2 |
| 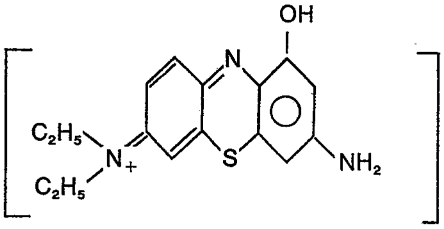 | $Cl^-$ | $R_1 = R_2 = C_2H_5$<br>$R_3 = H$<br>$R_4 = NH_2$ | $R_5 = H$<br>$R_6 = OH$<br>$X = Cl^-$ |

Tabelle I (Fortsetzung)

| Formel | Substituenten | |
|---|---|---|
| 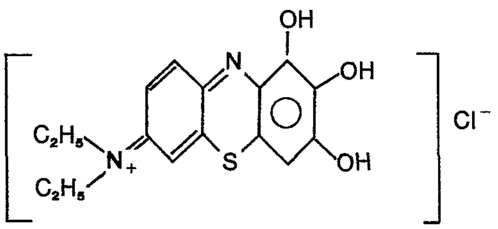 | $R_1 = R_2 = CH_3$<br>$R_3 = H$<br>$R_4 = H$ | $R_5 = OH$<br>$R_6 = H$<br>$X = Cl^-$ |
| 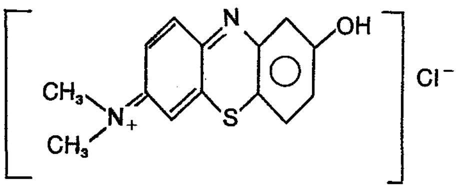 | $R_1 = R_2 = C_2H_5$<br>$R_3 = H$<br>$R_4 = OH$ | $R_5 = OH$<br>$R_6 = OH$<br>$X = Cl^-$ |
| 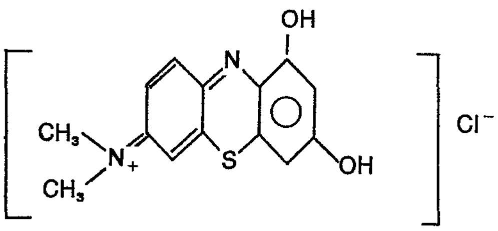 | $R_1 = R_2 = CH_3$<br>$R_3 = H$<br>$R_4 = OH$ | $R_5 = H$<br>$R_6 = OH$<br>$X = Cl^-$ |
| 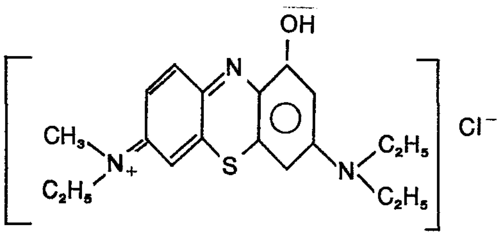 | $R_1 = CH_3$<br>$R_2 = C_2H_5$<br>$R_3 = H$<br>$R_4 = N\langle^{R'}_{R''}$ | $R_5 = H$<br>$R_6 = OH$<br>$R' = R'' = C_2$- $H_5$<br>$X = Cl^-$ |
| 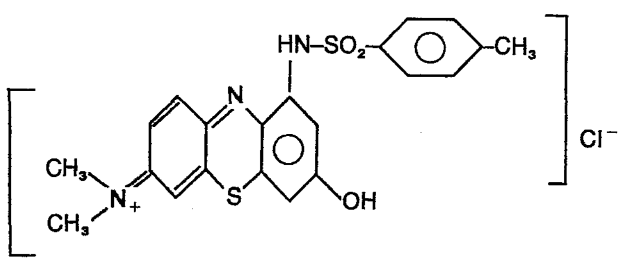 | $R_1 = R_2 = CH_3$<br>$R_3 = H$<br>$R_4 = OH$<br>$R_5 = H$<br>$R_6 = NHSO_2$- 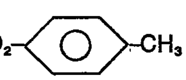<br>$X = Cl^-$ | |
| 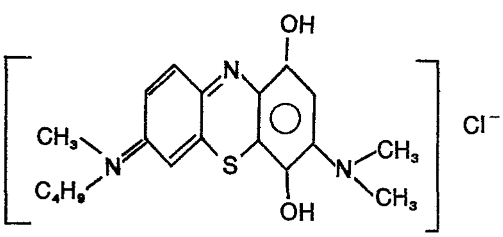 | $R_1 = CH_3$<br>$R_2 = C_4H_9$<br>$R_3 = OH$<br>$R_4 = N\langle^{R'}_{R''}$<br>$R_5 = N$ | $R_6 = OH$<br>$X = Cl^-$<br>$R' = R'' = CH_3$ |

Selbstverständlich liegt es im Rahmen der Erfindung, die erfindungsgemässen Substanzen auch in Mischung untereinander einzusetzen.

Ausserdem ist es möglich, die erfindungsgemässen Substanzen mit bekannten, belagsunterdrückenden Materialien zu kombinieren, beispielsweise mit organischen Farbstoffen wie Nigrosinschwarz oder Anilinschwarz, anorganischen Pigmenten wie in der DE-OS 2 044 259 beschrieben oder mit polymeren Iminen gemäss der DE-OS 2 357 867 bzw. mit polyaromatischen Aminen gemäss der DE-OS 2 541 010 oder mit Benzolthiazol-2-on-hydrazon-Derivaten gemäss der DE-OS 2 703 280 oder der DE-OS 2 757 924.

Weiterhin können die erfindungsgemässen Substanzen in Kombination mit Halogeniden, Hydroxiden, Oxiden und Carboxylaten irgendeines metallischen Elementes gemäss der DE-OS 2 557 788, insbesondere Zinn-II-Salzen, eingesetzt werden, wobei sich zwischen der erfindungsgemässen Substanz und dem Zusatz gegebenenfalls Komplexe in situ bilden können. Unter Umständen können derartige Metallkomplexe mit der erfindungsgemässen Substanz auch gleich von vornherein eingesetzt werden, z.B. mit Kupfer-, Silber-, Zink-, Zinn-, Molybdän-, Eisen-, Kobalt-, Nikkelionen wie in der DE-OS 2 548 424 beschrieben.

Schliesslich kommen als Zusätze unter anderem auch noch Antischaummittel, Antioxidantien, Benetzungsmittel u.dgl. in Frage.

Die oben beschriebenen Zusatzstoffe kommen vor allem dann zum Einsatz, wenn als Trägermaterial eine vernetzende Substanz oder Substanzmischung benutzt wird, da dann eine besonders wirkungsvolle Fixierung auf den Beschichtungsflächen erfolgt.

Unter dem Begriff «Überzug» sind generell solche Beschichtungen oder Filme bzw. Oberflächenbelegungen zu verstehen, die durch Inkontaktbringen einer Lösung oder Dispersion der erfindungsgemässen Substanzen – ggf. in Kombination miteinander bekannten belagsunterdrückenden Substanzen bzw. entsprechende Hilfssubstanzen wie oben beschrieben – mit den jeweiligen Innenteilen des Reaktors entstehen, beispielsweise durch Besprühen, Spülen u.dgl., oder aber auch solche Beschichtungen, die unter Mitverwendung einer filmbildenden, vorzugsweise vernetzenden Trägersubstanz erhältlich sind.

Die Menge an aufgebrachter Substanz gemäss obiger allgemeiner Formel beträgt in Abhängigkeit vom Polymerisationstyp, der Rezeptur, der Wandbeschaffenheit des Reaktors usw. zweckmässigerweise mehr als 0,001 $g/m^2$ und vorzugsweise mehr als 0,01 $g/m^2$. Die Obergrenze ist in erster Linie durch wirtschaftliche Überlegungen begrenzt und liegt in der Regel bei etwa 0,1 $g/m^2$.

Da die erfindungsgemässen Verbindungen einelektronenaustauschfähig sind und durch Luftsauerstoff oder beispielsweise peroxidische Initiatoren oxidiert werden, liegen in den erhaltenen Überzügen neben der eigentlichen Verbindung gemäss obiger Formel auch deren Oxydationsprodukte vor. Es ist zu vermuten, dass die sich dabei an den beschichteten Flächen bildenden Ladungsübergangskomplexe (Charge-Transfer-Komplexe) oder Semichinonstrukturen wesentliche Wirkungsträger sind.

Die Fixierung der Verbindungen gemäss obiger allgemeiner Formel auf den zu beschichtenden Reaktorteilen kann, wie vorstehend erwähnt, in der Weise erfolgen, dass eine zusätzliche filmbildende, vorzugsweise vernetzende Trägersubstanz verwendet wird, wie in DE-OS 2 703 280 und DE-OS 2 757 924.4 beschrieben.

Vorzugsweise werden die erfindungsgemässen Verbindungen jedoch, da sie ein genügend starkes Aufziehvermögen auf die entsprechenden Reaktorteile besitzen, ohne zusätzlichen Träger eingesetzt, d.h. die zu beschichtenden Flächen werden einfach mit einer Lösung oder Dispersion dieser Verbindungen behandelt. Gegebenenfalls kann diese Behandlung nach entsprechender Zwischentrocknung und eventueller Erwärmung mehrfach wiederholt werden. In der Regel reicht jedoch eine einmalige Behandlung aus. Diese Behandlung erfolgt nach den üblichen Verfahren im allgemeinen bei Normaltemperatur, z.B. durch Spülen, Ausspülen, Einstreichen, Besprühen mit Spüldüsen u.dgl., und zwar in der Regel vor jedem Polymerisationsansatz. Es hat sich dabei als zweckmässig erwiesen, die behandelten Flächen vor der Polymerisation mit etwa der gleichen Menge Wasser oder Polymerisationsflotte nachzuspülen und die abgelaufenen Lösungen zu entfernen.

Als Lösungsmittel für die erfindungsgemässen Verbindungen zur Herstellung der entsprechenden Behandlungslösungen kommen neben Wasser vorzugsweise solche Lösungsmittel in Frage, die in Wasser zumindest teilweise löslich (bzw. mit diesem mischbar) sind, beispielsweise niedrige Alkohole wie Methanol, Äthanol, n(i)-Propanol, n(i)-Butanol; Ätheralkohole wie Monomethylglykoläther, Ketone wie Aceton, Ester wie Äthylacetat, Butylacetat; Dimethylformamid, Dimethylacetamid, Dimethylsulfoxyd, Acetonitril sowie entsprechende Gemische untereinander sowie mit Wasser.

Vorzugsweise werden Wasser oder dessen Gemische mit niederen Alkoholen mit 1 bis 3 C-Atomen eingesetzt und speziell Wasser/Methanol-Mischungen, wobei der Wassergehalt dieser Mischungen grösser als 50 Gew.-%, bezogen auf die Gesamtmischung, sein kann, je nach der Löslichkeit (die natürlich von der Art der Substituenten abhängt) und der gewünschten Konzentration. Substanzen, die saure oder basische Gruppen tragen, können auch durch Salzbildung bei entsprechendem pH-Wert in wässrige oder wässrig/alkoholische Lösung überführt werden. Besonders geeignet sind solche Verbindungen, die bei einem pH-Wert von grösser als 7, vorzugsweise zwischen 8 und 10,5, löslich werden. Im stark sauren Bereich ist die Wirksamkeit der Substanzen mitunter erheblich vermindert.

Der Gehalt der Gebrauchslösungen an erfindungsgemässer Substanz kann in weiten Grenzen etwa zwischen 0,1 Mol und 100 mMol pro Liter schwanken. Auch die hochverdünnten Lösungen sind wenig empfindlich gegen Oxydation durch Luftsauerstoff und erfordern kein weitgehend anäerobes Arbeiten. Bevorzugt werden Lösungen mit 1–50 mMol Substanz/l; diese können unter normalen Bedingungen, also an Luft, gehandhabt und angewendet werden.

Die für dieses Verfahren verwendeten Behandlungslösungen besitzen speziell im alkalischen Bereich ein ausgeprägtes Reduktionsvermögen. Partiell oxidierte Lösungen zeigen keine Beeinträchtigung ihrer Wirkung. Die darin wahrscheinlich enthaltenen Charge-Transfer-Komplexe können sogar eine Wirkungssteigerung auslösen. Daher ist es nicht nötig, die Lösungen entweder frisch zuzubereiten, oder die Herstellung und Lagerung unter Stickstoff-Schutz vorzunehmen. Die

beanspruchten Substanzen können auch in reduzierter Form, z. B. verküpt mit Dithionit oder Formamidinsulfinsäure eingesetzt werden, teilweise sind solche Lösungen besonders ergiebig und in ihrer Wirkung gesteigert.

Um die Netzeigenschaften der Gebrauchslösungen zu verbessern, können ihnen vorteilhaft die gleichen Dispergatoren oder Netzmittel zugesetzt werden, die auch der Flotte für die Suspensionspolymerisation zugesetzt werden; Beispiele hierfür sind in der DE-OS 2 703 280 oder der DE-OS 2 735 770 beschrieben.

Jedes Polymerisationsgefäss für die Polymerisation von äthylenisch ungesättigten Verbindungen kann mit dem erfindungsgemässen Überzug, gegebenenfalls bei Nichtmetallreaktoren unter Mitverwendung von Trägersubstanzen (Lacken) zur Fixierung, versehen werden. Somit können die zu beschichtenden Flächen aus den verschiedensten Materialien bestehen, z. B. aus Glas, Emaille bzw. Schmelzglasur oder Metall, vorzugsweise Stahl. Die grössten Probleme bezüglich Polymerabscheidung treten im allgemeinen in Stahlreaktoren auf, so dass diese bevorzugt für den erfindungsgemässen Überzug in Frage kommen.

Neben den Innenwänden des Polymerisationsreaktors können sich auch Polymerablagerungen an den sogenannten Einbauten, wie Rührvorrichtungen, Stromstörern (Prallblechen), Einfüllstutzen, Ventilen, Pumpen, Rohrleitungen, Messinstrumenten und Innenkühlern (Wärmeaustauschern) bilden, die daher gleichfalls ganz oder teilweise zu beschichten bzw. zu behandeln sind. Gleiches gilt auch für Aussenkühler, sofern diese mehr oder weniger direkt auf das Polymerisationsgefäss aufgesetzt sind. Gegebenenfalls kann es auch von Vorteil sein, der Polymerisationsflotte geringe Mengen der erfindungsgemässen, belagsunterdrückenden Substanz, beispielsweise 50 bis 100 ppm zuzugeben.

Bei dem erfindungsgemässen Verfahren zur Herstellung von Vinylchlorid-Polymerisation wird die Polymerisation selbst nach üblichen Methoden durchgeführt, wobei Vinylchlorid-Homopolymerisat, -Pfropfcopolymerisate oder -Copolymerisate hergestellt werden können, nach der kontinuierlichen oder diskontinuierlichen Verfahrensweise, mit oder ohne Verwendung eines Saat-Vorpolymerisates usw. Es kann dabei in wässriger Dispersion, d.h. in Emulsion oder Suspension in Gegenwart der üblichen Initiatoren, Emulgatoren bzw. Suspensionsstabilisatoren und gegebenenfalls weiteren Polymerisationshilfsstoffen polymerisiert werden. Das Polymerisationsverfahren kann unter Rückflusskühlung sowie ferner auch in der Fahrweise mit gefülltem Reaktor durchgeführt werden, bei der also das Reaktionsgefäss mit dem Polymerisationsmedium vollständig gefüllt ist und während der gesamten Polymerisation durch entsprechendes Nachdosieren in diesem Zustand gehalten wird.

Als Initiatoren, die zweckmässigerweise in Mengen von 0,01 bis 3 Gew.-%, vorzugsweise 0,1–0,3 Gew.-%, bezogen auf Monomere, eingesetzt werden, seien beispielsweise genannt: Diaryl-, Diacylperoxide, wie Diacetyl-, Acetylbenzoyl-, Dilauroyl-, Dibenzoyl-, Bis-2,4-dichlorbenzoyl-, Bis-2-Methylbenzoyl-peroxid; Dialkylperoxide wie Di-tert-butylperoxid, Perester wie tert.-Butylpercarbonat; tert.-Butylperacetat, tert.-Butylperoctoat, tert.-Butylperpivalat; Dialkylperoxiddicarbonate wie Diisopropyl-, Diäthylhexyl-, Dicyclohexyl-, Diäthylcyclohexylperoxiddicarbonate; gemischte Anhydride von organischen Sulfopersäuren oder organischen Säuren wie Acetylcyclohexylsulfonylperoxid; als Polymerisationskatalysatoren bekannte Azoverbindungen, wie Azoisobuttersäurenitril, ausserdem Persulfate, wie Kalium-, Natrium- oder Ammoniumpersulfate, Wasserstoffperoxid, tert.-Butylhydroperoxid oder andere wasserlösliche Peroxide, sowie auch entsprechende Gemische. Im Falle von peroxidischen Katalysatoren können diese auch in Gegenwart von 0,01 bis 1 Gew.-%, bezogen auf Monomere, einer oder mehrerer reduzierender Substanzen, die zum Aufbau eines Redox-Katalysatorsystems geeignet sind, wie z. B. Sulfite, Bisulfite, Dithionite, Thiosulfate, Aldehyd-Sulfoxylate, z. B. Formaldehydsulfoxylat, eingesetzt werden. Gegebenenfalls kann die Polymerisation in Gegenwart von löslichen Metallsalzen, beispielsweise des Kupfers, Silbers, Eisens oder Chroms, durchgeführt werden, wobei die Menge zweckmässigerweise 0,05 bis 10 ppm (auf Metallbasis, bezogen auf Monomeres) beträgt.

Ferner kann die Polymerisation, falls sie nach dem Suspensionsverfahren durchgeführt wird, in Gegenwart von 0,01 bis 1 Gew.-%, vorzugsweise 0,05 bis 0,3 Gew.-%, bezogen auf Monomere, von einem (oder mehreren) Schutzkolloid(en), wie beispielsweise Polyvinylalkohol, der gegebenenfalls noch bis zu 40 Mol-% Acetylgruppen enthält, Cellulosederivaten, wie wasserlösliche Methylcellulose, Carboxymethylcellulose, Hydroxyäthylcellulose, Methylhydroxypropylcellulose, sowie Gelatine, Leim, Dextran, ferner Mischpolymerisaten von Maleinsäure bzw. deren Halbestern und Styrolen stattfinden.

Ausserdem kann die Polymerisation in Gegenwart von 0,01 bis 5 Gew.-%, bezogen auf Monomere, von einem oder mehreren Emulgatoren durchgeführt werden, wobei die Emulgatoren auch in Mischung mit den obengenannten Schutzkolloiden eingesetzt werden können. Als Emulgatoren können anionische, amphotere, kationische sowie nichtionogene verwendet werden. Als anionische Emulgatoren sind beispielsweise geeignet: Alkali-, Erdalkali-, Ammoniumsalze von Fettsäuren, wie Laurin-, Palmitin-, oder Stearinsäure; von sauren Fettalkoholschwefelsäureestern; von Paraffinsulfonsäuren; von Alkylarylsulfonsäuren, wie Dodecylbenzol- oder Dibutylnaphthalinsulfonsäure, von Sulfobernsteinsäuredialkylestern, sowie die Alkali- und Ammoniumsalze von epoxygruppenhaltigen Fettsäuren, wie Epoxystearinsäure; von Umsetzungsprodukten von Persäuren, z. B. Peressigsäure mit gesättigten Fettsäuren wie Ölsäure. Als amphotere bzw. kationenaktive Emulgatoren sind beispielsweise geeignet: Alkylbetaine, wie Dodecylbetain, sowie Alkylpyridiniumsalze, wie Laurylpyridiniumhydrochlorid; ferner Alkylammoniumsalze, wie Oxäthyldodecylammoniumchlorid. Als nichtionogene Emulgatoren kommen beispielsweise in Frage: Teilfettsäureester mehrwertiger Alkohole, wie Glycerinmonostearat, Sorbitmonolaurat, -oleat oder -palmitat; Polyoxyäthylenäther von Fettalkoholen oder aromatischen Hydroxyverbindungen; Polyoxyäthylenester von Fettsäuren sowie Polypropylenoxid-Polyäthylenoxid-Kondensationsprodukten.

Neben Katalysatoren, gegebenenfalls Schutzkolloiden und/oder Emulgatoren kann die Polymerisation in Gegenwart von Puffersubstanzen, wie beispielsweise Alkaliacetaten, Borax, Alkaliphosphaten, Alkalicarbonaten, Ammoniak oder Ammoniumsalzen von Carbonsäuren sowie von Molekülgrössen-Reglern, wie beispielsweise aliphatischen Aldehyden mit 2 bis 4 Kohlenstoffatomen, Chlor- oder Bromkohlenwasserstoffen, wie z.B. Di- und Tri-chloräthylen, Chloroform, Bromoform, Methylenchlorid, sowie Mercaptanen durchgeführt werden.

Die Polymerisationstemperatur beträgt in der Regel 30 bis 100 °C, der Polymerisationsdruck 4 bis 40 atü und der pH-Wert 3,5–8.

Zur Copolymerisation mit Vinylchlorid sind beispielsweise eines oder mehrere folgender Monomerer geeignet: Olefine, wie Äthylen oder Propylen; Vinylester von geradkettigen oder verzweigten Carbonsäuren mit 2 bis 20, vorzugsweise 2 bis 4 Kohlenstoffatomen wie Vinylacetat, -propionat, -butyrat, -1-Äthylhexoat, Vinylisotridecansäureester; Vinylhalogenide, wie Vinylfluorid, Vinylidenchlorid; Vinyläther; Vinylpyridin; ungesättigte Säuren, wie Malein-, Fumar-, Acryl-, Methacrylsäure und deren Mono- oder Diester mit Mono- oder Dialkoholen mit 1 bis 10 Kohlenstoffatomen; Maleinsäureanhydrid, Maleinsäureimid, sowie deren N-Substitutionsprodukte mit aromatischen, cycloaliphatischen sowie gegebenenfalls verzweigten, aliphatischen Substituenten; Acrylnitril; Styrol.

Zur Pfropfcopolymerisation können beispielsweise elastomere Polymerisate verwendet werden, die durch Polymerisation von einem oder mehreren folgender Monomerer erhalten wurden: Diene, wie Butadien, Cyclopentadien; Olefine, wie Äthylen, Propylen; Styrol; ungesättigte Säuren, wie Acryl- oder Methacrylsäure, sowie deren Ester mit Mono- oder Dialkoholen mit 1 bis 10 Kohlenstoffatomen; Acrylnitril; Vinylverbindungen, wie Vinylester von geradkettigen oder verzweigten Carbonsäuren mit 2 bis 20, vorzugsweise 2 bis 4 Kohlenstoffatomen; Vinylhalogenide, wie Vinylchlorid, Vinylidenchlorid.

Nach der Polymerisation können den als wässrige Dispersion anfallenden Polymerisaten weitere Stoffe zur Stabilisierung bzw. zur Verbesserung ihrer Weiterverarbeitungseigenschaften zugesetzt werden. Anschliessend wird nach üblichen Aufbereitungstechniken das trockene Polymere gewonnen.

Die Co- bzw. Pfropfcopolymerisate, die erfindungsgemäss hergestellt werden können, enthalten mindestens 50 Gew.-%, vorzugsweise mindestens 80 Gew.-% polymerisierte Vinylchlorid-Einheiten.

Das erfindungsgemässe Verfahren ist vorzugsweise für die Polymerisation in wässriger Suspension mit Öl-löslichen Initiatoren unter Zusatz mindestens eines Schuztkolloides (Suspensionsstabilisators) anwendbar und insbesondere für die Herstellung von Vinylchlorid-Homopolymerisaten sowie für Vinylchlorid-Copolymerisate mit mindestens 50 Gew.-%, vorzugsweise 80 bis 99 Gew.-% polymerisierten Vinylchlorid-Einheiten.

Die Herstellung der erfindungsgemässen Substanzen erfolgt nach bekannten Synthesewegen, wobei jeweils die entsprechend substituierten Ausgangsprodukte einzusetzen sind. Ein allgemeiner Syntheseweg, wie er etwa in Ullmann (1966) Bd. 17, S. 326 bis 329 sowie in der dort weiter zitierten Literatur beschrieben ist, besteht beispielsweise in der nachstehenden Reaktionsfolge:

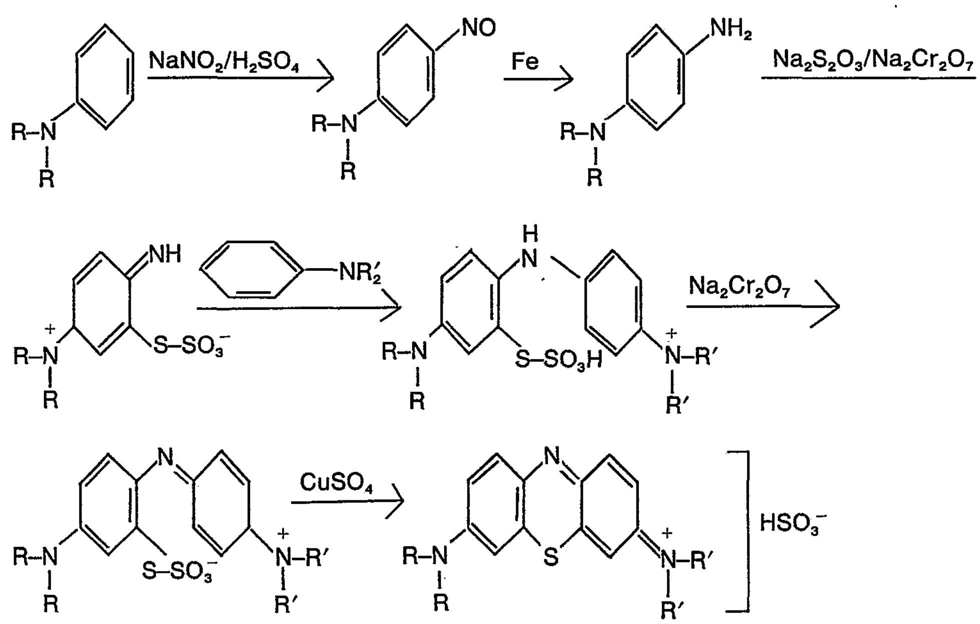

Verbindungen, bei denen $R_5$ und $R_6$ Teil eines aromatischen Rings sind, können gleichfalls nach den in der oben genannten Literaturstelle angegebenen Methoden hergestellt werden.

Falls diese Verbindungen als Mittel zur Belagsunterdrückung eingesetzt werden, ist dabei eine Isolierung nicht unbedingt erforderlich; vielmehr können beispielsweise die erhaltenen Lösungen als solche weiter verarbeitet werden, d.h. verdünnt und mit weiteren Zusätzen versehen werden.

Die gute belagsunterdrückende und die geringe polymerisationsinhibierende Wirkung der erfindungsgemässen Thiazinderivate ist als überraschend anzusehen, da eine grosse Zahl von Vertretern dieser Substanzklasse – wie nachfolgend durch Vergleichsversuche gezeigt wird – entweder unwirksam sind oder teilweise sogar belagsfördernde Eigenschaften aufweisen und in einigen Fällen zusätzlich als Polymerisationsinhibitoren wirken.

Unerwartet und überraschend ist weiterhin, dass es beim Einsatz der beanspruchten Substanzen zu keiner Verminderung des rezepturbedingten Kornverteilungsspektrums des Polymerisates kommt, so dass eine oft langwierige und aufwendige spezielle Anpassung der Polymerisationsrezeptur an das Belagsverhinderungsverfahren nicht notwendig ist. Im Gegenteil dazu wurde sogar gefunden, dass bei Anwendung der erfindungsgemässen Verbindungen gewisse Produkteigenschaften deutlich im günstigen Sinne beeinflusst werden, so der für die Weichmacheraufnahme kennzeichnende ZFR-Wert (DIN 53 417, Bl. 1).

Ein weiterer Vorteil des vorliegenden Verfahrens besteht in der grossen Anwendungsbreite, auch für die an sich problematischen Produkttypen mit niedrigem Molekulargewicht.

Wegen der hohen Wandaffinität der erfindungsgemässen Thiazinderivate können diese in sehr geringen Konzentrationen eingesetzt werden, was Vorteile gegenüber den bisher bekannten Vertretern dieser Substanzklasse bringt, u.a. auch wegen der dadurch bedingten geringeren Belastung der Umwelt und der einfacheren Behandlung des Abwassers. Es wurde dabei gefunden, dass noch Konzentrationen von 0,005% von Wirksubstanz in der Behandlungslösung einen brauchbaren Effekt zeigen, wobei man im allgemeinen jedoch Konzentrationen von 0,01 bis 0,25% bevorzugen wird.

Das erfindungsgemässe Verfahren ermöglicht es im übrigen, viele Polymerisationsansätze über lange Zeiträume ohne störende Belagsbildung an den Wänden und den Einbauten des Reaktors durchzuführen. Hierdurch wird ein konstant guter Wärmeübergang auf die Behälterwand, der durch die Überzugsschicht praktisch nicht beeinträchtigt wird, und damit gleichmässige Produktqualität gewährleistet. Zeitaufwendige, kapazitätsmindernde Wandreinigungsarbeiten entfallen, desgleichen die sonst unumgängliche häufige Öffnung des Reaktors mit den damit verbundenen schädlichen Vinylchlorid-Emissionen. Bei der kontinuierlichen Polymerisation können die Zeiträume bis zur Abstellung des Kontinuums um ein Vielfaches verlängert werden.

Ein weiterer Vorteil des erfindungsgemässen Verfahrens besteht darin, dass es auch in älteren Reaktoren mit erheblichen Wandrauhigkeiten, die besonders stark die Belagsbildung fördern, anwendbar ist, da durch den erfindungsgemässen Überzug die Keimfunktion dieser Wandporen wirksam unterdrückt wird. Dies gilt insbesondere bei Einsatz von besonders aktiven Komplexbildnern der bevorzugten Struktur, mit denen sich ausserdem Überzüge besonders hoher Haftfestigkeit und Dauerhaftigkeit erzielen lassen, die insbesondere auch bei der Copolymerisation von Vinylchlorid gute belagsunterdrückende Wirkung zeigen.

Die erfindungsgemässen Verbindungen können neben ihrem Einsatz als belagsverhindernde Mittel aufgrund ihrer komplexbildenden Eigenschaften mit Vorteil auch auf dem Gebiet des Korrosionsschutzes, in der Galvanotechnik und für serologische Tests verwendet werden.

Die Erfindung wird nachfolgend anhand von Beispielen näher beschrieben.

Beispiele 1–6 und Vergleichsversuche A und B

I. Herstellung der erfindungsgemässen Thiazin-Derivate

Diese Herstellung wird anhand folgender Verbindung erläutert:

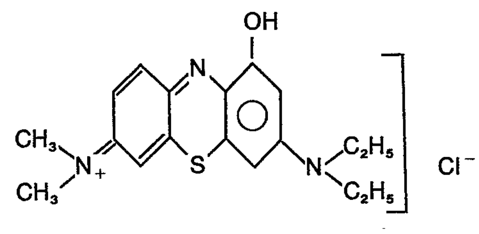

15,5 Gew.-Teile 4-Aminodimethylanilin wurden in 14,6 Gew.-Teilen 1n HCl gelöst. In diese Lösung wurden dann 70 Gew.-Teile Zinkchlorid, gelöst in 100 Gew.-Teilen Wasser, hinzugegeben. Danach wurden 24 Gew.-Teile $Al_2(SO_4)_3 \cdot 18\ H_2O$, gelöst in 40 Gew.-Teilen Wasser, eingetragen und schliesslich noch 30 Gew.-Teile $Na_2S_2O_3$, gelöst in 30 Gew.-Teilen Wasser, hinzugesetzt.

Diesem Gemisch wurde anschliessend ein Drittel einer Lösung von 32 Gew.-Teilen $Na_2Cr_2O_7$ in 60 Gew.-Teilen Wasser bei Raumtemperatur zugefügt. Die Reaktion war exotherm und die Temperatur steigt dabei auf 35 °C. Danach wurde auf 40 °C erwärmt und eine Lösung von 20 Gew.-Teilen m-Dimethylaminophenol in 19 Gew.-Teilen konz. HCl (d = 1,18) und zum Schluss die restliche $Na_2Cr_2O_7$-Lösung zugegeben.

Dieses Gemisch wurde zunächst 15 Minuten auf 70 °C erwärmt und dann noch 30 Minuten bei 85 °C nachgerührt.

Nach dem Erkalten wurde das ausgefallene Produkt abgesaugt, mit Wasser in Portionen nachgewaschen und bei 80° im Vakuum bis zur Gewichtskonstanz getrocknet.

Diese Synthese ist allgemein für die beanspruchten Verbindungen anwendbar, nur die Aufarbeitung und Abscheidung von leichtlöslichen Verbindungen muss nach 3stündigem Nachrühren bei 85 °C an Stelle von Wasser mit Kochsalzlösung erfolgen.

Wird an Stelle von 3-Aminophenol die entsprechend molare Menge 3-Tosylaminodiäthylanilin eingesetzt, so wird die analoge Verbindung erhalten mit $R_6$ = N-Tosyl.
H

Die Verbindungen, bei denen $R_5$ und $R_6$ Teil eines aromatischen Rings sind, wurden nach den in der oben genannten Literaturstelle angegebenen allgemeinen Methoden hergestellt.

II. Einsatz im Polymerisationsverfahren

1. Versuchsanordnung

Bei der exakten Ausprüfung der Produkte hinsichtlich Belagsverhinderung ist zu beachten, dass einerseits die Rezeptur und Fahrweise der VC-Polymerisation einen starken Einfluss auf den Grad der Belagsbildung haben, so dass selbst kleine Modifikationen schon sehr grosse Veränderungen der Belagsmenge bewirken können. Selbst wenn bei den einzelnen Ansätzen die jeweiligen Bedingungen, soweit möglich, gleichgehalten werden, kann die absolute Menge des Belages noch beachtlichen Schwankungen unterliegen. Wirklich repräsentativ sind daher nur Mittelwerte aus einer grösseren Anzahl von Versuchen. Die sicherste Methode für eine exakte und vergleichende Ausprüfung besteht infolgedessen darin, absolut gleiche und gleich vorbehandelte Bleche anschliessend mit den jeweiligen Substanzen zu behandeln und dann zusammen mit den zwar genau so vorbehandelten, aber ohne mit der Testsubstanz präparierten Blechen als Blindproben in einem Reaktor zu befestigen und die Auswertung erst nach mehreren Polymerisationsläufen vorzunehmen. Die gefundenen Ergebnisse sind dann auf die jeweils zugehörigen Blindwerte zu beziehen. In dieser Weise wurde nachfolgend verfahren.

In einem 400 l $V_4A$-Reaktor, der mit einem Impellerrührer ausgerüstet ist, wird eine $V_4A$-Manschette so gegen die Kesselwand gespannt, dass ca. 25 Stück polierte Probeplättchen mit einer Grösse von 200 mm × 36 mm und einer Rauhhilfe von ca. 3 µ aus kesselgleichem Material auf der Innenseite der Manschette befestigt werden können. Auf diese Probeplättchen werden die zu prüfenden Belagsverhinderungssysteme aus ihren Lösungen mit dem angegebenen Gehalt an Belagverhinderer durch Aufpinseln aufgetragen. Bei jeder Ausprüfungsserie werden zwei ohne Wirksubstanz behandelte Probeplättchen zur Ermittlung des Blindwertes mitgefahren.

Die Ausprüfung wird wie folgt durchgeführt: Nach Vorlage von 215 Liter E-Wasser, welches als Dispergator gelöst 50 g teilverseiftes Polyvinylacetat und 40 g Methylhydroxypropylcellulose enthält, wird der Reaktor verschlossen, nach Verdrängen der Luft mit 115 kg Vinylchlorid chargiert und 115 g Di-2-Äthylhexylperoxydicarbonat (als 65%ige Lösung in Aliphaten) als Aktivator nachgedrückt.

Der Reaktor wird anschliessend unter Rühren (150 UpM) auf 53 °C aufgeheizt und so lange bei 53 °C gehalten, bis der Reaktordruck um 4,0 bar gefallen ist. Die Polymerisationszeit beträgt ca. 6 Stunden. Nach Reaktionsende wird das Reaktionsgemisch abgekühlt, der Polymerisationsreaktor entmonomerisiert, entleert, mit Wasser ausgespült und geöffnet.

Die Probeplättchen werden begutachtet und erneut mit Belagsverhinderern beaufschlagt. Auf diese Weise werden im Reaktor drei Ansätze durchgeführt. Nach den drei Ansätzen werden die Probeplättchen von der Manschette getrennt, getrocknet und das Gewicht des Belages der behandelten Probeplättchenfläche quantitativ bestimmt.

Die Behandlungslösungen für die Beispiele sind 0,1%ig, bezogen auf Wirksubstanz, und bestehen aus 0,1 g Testsubstanz in

a) 20 ml NaOH + 80 ml E-Wasser (für die alkalische Einstellung) mit einem Blindwert von 156 bzw. 158, oder
b) 20 ml 2nHCl + 80 ml E-Wasser (für die saure Einstellung) mit einem Blindwert von 148.

Beim Blindwert entfällt jeweils die Testsubstanz.

Die Ergebnisse sind in der Tabelle II aufgelistet und mit dem jeweils zugehörigen Blindwert als Testwert/Blindwert angegeben.

Tabelle II

| Vergleichsversuch Beispiel | Formel | Einstellung | Belag (mg) | Bemerkung |
|---|---|---|---|---|
| A | 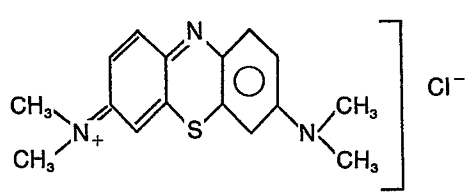 | a | 120/156 | Vergleichsversuch |
| B | " | b | 108/148 | Vergleichsversuch |

Tabelle II (Fortsetzung)

| Vergleichs-versuch/ Beispiel | Formel | Ein-stellung | Belag (mg) | Bemerkung |
|---|---|---|---|---|
| 1 | 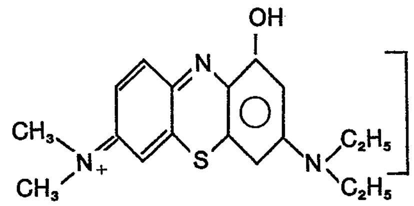 $Cl^-$ | a | 60/156 | erfindungs-gemäss |
| 2 | " | b | 45/148 | " |
| 3 | 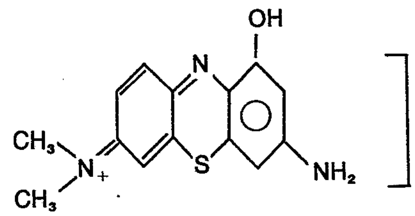 $Cl^-$ | a | 32/156 | " |
| 4 | " | b | 28/148 | " |
| 5 | 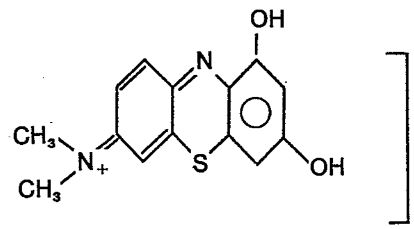 $Cl^-$ | a | 26/156 | " |
| 6 | " | b | 30/148 | " |
| | Blindwert | a | 156 | |
| | Blindwert | b | 148 | |

**Patentansprüche**

1. Verfahren zur Herstellung von Vinylchlorid-Homo-, -Co- oder -Pfropfpolymerisaten, die mindestens 50 Gew.-% polymerisierte Vinylchlorid-einheiten enthalten, durch Polymerisation des Monomeren oder Monomerengemisches in wässriger Dispersion mit radikalbildenden Katalysatoren, gegebenenfalls Suspensionsstabilisatoren, Emulgatoren und weiteren Polymerisationshilfsstoffen, dadurch gekennzeichnet, dass die Polymerisation in einem Reaktor durchgeführt wird, dessen Innenwände und dessen übrige Teile, an denen sich Polymerablagerungen bilden können, ganz oder teilweise mit einem Überzug versehen sind, der Verbindungen der allgemeinen Formel

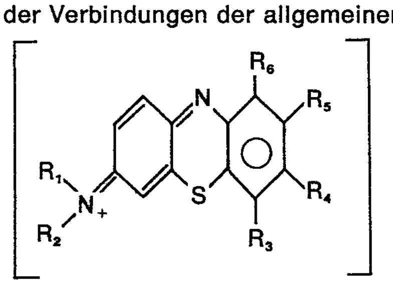 $X^-$

enthält, in der die einzelnen Substituenten folgendes bedeuten:

$R_1$, $R_2$ = H; gesättigter Kohlenwasserstoffrest mit 1 bis 8 C-Atomen;

$R_3$, $R_5$ = H; gesättigter Kohlenwasserstoffrest mit 1 bis 8 C-Atomen; OH, O-gesättigter Kohlenwasserstoffrest mit 1 bis 8 C-Atomen; $-N<^{R'}_{R''}$;

$R_4$ = OH; $N<^{R'}_{R''}$; $-\underset{H}{N}-SO_2$-Aromat, vorzugsweise isocyclisch mit 6 bis 10 C-Atomen, gegebenenfalls substituiert mit Resten $R_1/R_2$;

$R_6$ = OH; $-\underset{H}{N}-SO_2$-Aromat, vorzugsweise isocyclisch mit 6 bis 10 C-Atomen, gegebenenfalls substituiert mit Resten $R_1/R_2$, sofern $R_4$ nicht schon diesen Substituenten darstellt; oder

$R_5$ und $R_6$ = zusammen Pyridin oder einen isocyclischen oder heterocyclischen Aromat mit 6 bis 10 C-Atomen, gegebenenfalls substituiert mit Resten $R_1/R_2$ bilden;

wobei jedoch mindestens einer der Reste $R_3$ bis $R_6$ OH darstellt;

R′ = $R_1/R_2$;

R″ = $R_1/R_2$; zusätzlich Aromat, vorzugsweise isocyclisch mit 6 bis 10 Kohlenstoffatomen, gegebenenfalls substituiert durch eine oder mehrere Gruppen entsprechend $R_1/R_2$, O-gesättigter Kohlenwasserstoffrest mit 1 bis 8 C-Atomen, OH, COOH, $CON\langle^{H}_{H}$, $SO_3H$, $SO_2N\langle^{H}_{H}$, $N\langle^{R^{III}}_{R^{IV}}$, ($R^{III}$, $R^{IV}$ = H oder $C_1$–$C_6$-Alkyl);

X = beliebiges einwertiges Anion oder ein entsprechendes Anionäquivalent.

2. Verfahren nach Anspruch 1, dadurch gekennzeichnet, dass $R_5$ und $R_6$ einen Pyridinring bilden und $R_3$ für H oder OH und $R_4$ für OH oder $N\langle^{R'}_{R''}$ stehen.

3. Verfahren nach Ansprüchen 1 und 2, dadurch gekennzeichnet, dass $R_1$ und $R_2$ $C_{1-4}$-Alkyl; $R_3$ H oder OH; $R_4$ OH, $N\langle^{R'}_{R''}$; $R_5$ H oder OH; $R_6$ OH, oder $NHSO_2$-isocyclischer Aromat mit 6 bis 10 C-Atomen, gegebenenfalls substituiert mit Resten $R_1/R_2$, bedeuten.

4. Verfahren nach Anspruch 1 bis 3, dadurch gekennzeichnet, dass die beschichteten Oberflächen vor der Polymerisation mit Wasser gespült werden.

5. Verbindungen der allgemeinen Formel

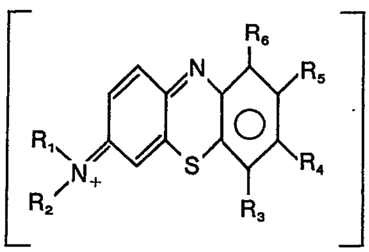 $X^-$

in der $R_1$ bis $R_6$ die Bedeutung gemäss Anspruch 1 bis 3 haben.

6. Mittel zur Beschichtung der Innenteile von Polymerisationsgefässen zur Unterdrückung der Wandbelagsbildung, dadurch gekennzeichnet, dass es Verbindungen gemäss Anspruch 5 enthält.

7. Polymerisationsgefäss, dadurch gekennzeichnet, dass seine Innenwände und die übrigen Teile, an denen sich Polymerablagerungen bilden können, ganz oder teilweise mit einem Überzug versehen sind, der Verbindungen der Ansprüche 1 bis 3 enthält.

## Claims

1. Process for the manufacture of vinyl chloride homopolymers, copolymers or graft polymers containing at least 50% by weight of polymerized vinyl chloride units by polymerization of the monomer or monomer mixture in aqueous dispersions using catalysts which form free radicals and if appropriate suspension stabilizers, emulsifiers and further polymerization auxiliaries, which comprises carrying out the polymerization in a reactor, in which the internal walls and the remaining components on which polymer deposits can form are provided, completely or partly, with coating compounds of the general formula

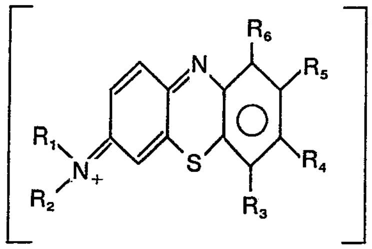 $X^-$

wherein the substituents $R_1$ to $R_9$ represent the following:

$R_1$, $R_2$ = H; or a saturated hydrocarbon radical with 1 to 8 C-atoms;

$R_3$, $R_5$ = H; a saturated hydrocarbon radical with 1 to 8 C-atoms; OH; a O-(saturated hydrocarbon) radical with 1 to 8 C-atoms; $-N\langle^{R'}_{R''}$;

$R_4$ = H; OH; $-N\langle^{R'}_{R''}$; or $-N(H)-SO_2$-(aromatic radical), the aromatic radical being preferably isocyclic and having 6 to 10 C-atoms and, if desired, being substituted by the substituents $R_1/R_2$;

$R_6$ = OH; $-N(H)-SO_2$-(aromatic radical), the aromatic radical being preferably isocyclic and having 6 to 10 C-atoms, and, if desired, being substituted by the substituents $R_1/R_2$, provided, that $R_4$ does not already represent this substituent; or

$R_5$ and $R_6$ together = a pyridine ring or an isocyclic or heterocyclic aromatic radical having 6 to 10 C-atoms, and, if desired, being substituted by the substituents $R_1/R_2$;

the proviso being that at least one of the radicals $R_3$ to $R_6$ represents OH with

R′ = H or the substituents $R_1/R_2$;

R″ = the substituents $R_1/R_2$; or an aromatic radical, preferably isocyclic, which has 6 to 10 C-atoms and which may be substituted by one or more radicals standing for $R_1/R_2$; or an O-(saturated hydrocarbon) radical with 1 to 8 C-atoms; or OH; or COOH; or $CON\langle^{H}_{H}$; or $SO_3H$; or $SO_2N\langle^{H}_{H}$; or $N\langle^{R^{III}}_{R^{IV}}$ ($R^{III}$ and $R^{IV}$ denote H or $C_1$–$C_6$-alkyl);

X = any desired monovalent anion or an appropriate anion equivalent.

2. Process as claimed in Claim 1, wherein $R_5$ and $R_6$ form a pyridine ring, $R_3$ represents H or OH and $R_4$ represents OH or $N\langle^{R'}_{R''}$.

3. Process as claimed in Claims 1 and 2, wherein $R_1$ and $R_2$ denote $C_{1-4}$-alkyl; $R_3$ denotes H

or OH; $R_4$ denotes OH or $N\langle^{R'}_{R''}$, $R_5$ denotes H or OH, $R_6$ denotes OH or $NHSO_2$-(isocyclic aromatic radical), the aromatic radical having 6 to 10 C-atoms and optionally being substituted by $R_1/R_2$.

4. Process as claimed in Claims 1 to 3, wherein the coated surfaces are rinsed with water before the polymerization.

5. Compounds of the general formula

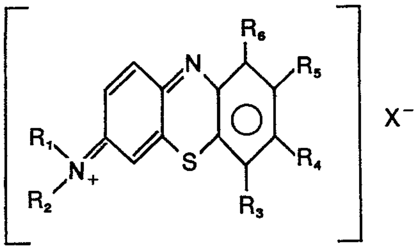

in which the radicals $R_1$ to $R_6$ have the meaning according to Claims 1 to 3.

6. Agent for coating the internal components of polymerization vessels in order to suppress the formation of deposits on the walls, which contains compounds according to Claim 5.

7. Polymerization vessel in which the internal walls and remaining components on which polymer deposits can form are provided, completely or partly, with a coating containing the compounds of Claims 1 to 3.

**Revendications**

1. Procédé de préparation d'homopolymérisats, de copolymérisats ou de polymérisats greffés de chlorure de vinyle, contenant au moins 50% en poids de motifs chlorure de vinyle polymérisés, par polymérisation du monomère ou du mélange de monomères en dispersion aqueuse avec des catalyseurs radicalaires, éventuellement des stabilisants de suspension, des émulsionnants et d'autres adjuvants de polymérisation, caractérisé en ce que la polymérisation est mise en œuvre dans un réacteur dont les parois intérieures et les autres éléments sur lesquels peuvent se former des dépôts de polymères sont pourvus en totalité ou en partie d'un revêtement contenant des composés de formule générale

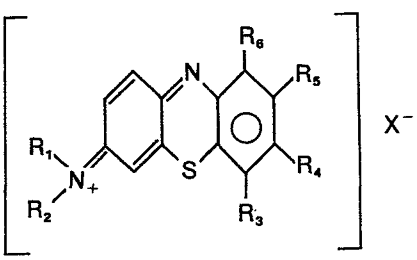

dans laquelle les différents substituants ont les significations suivantes:

$R_1$, $R_2$ = H; un radical hydrocarboné saturé à 1 à 8 atomes de carbone;

$R_3$, $R_5$ = H; un radical hydrocarboné saturé à 1 à 8 atomes de carbone; OH; un radical O-hydrocarboné saturé à 1 à 8 atomes de carbone; $-N\langle^{R'}_{R''}$;

$R_4$ = OH; $N\langle^{R'}_{R''}$; $-\underset{H}{N}-SO_2$-aromatique, de préférence isocyclique à 6 à 10 atomes de carbone, éventuellement substitué par des radicaux $R_1/R_2$;

$R_6$ = OH; $-\underset{H}{N}-SO_2$-aromatique, de préférence isocyclique à 6 à 10 atomes de carbone, éventuellement substitué par des radicaux $R_1/R_2$, si $R_4$ ne représente pas déjà un tel substituant; ou

$R_5$ et $R_6$ = ensemble la pyridine ou un aromatique isocyclique ou hétérocyclique à 6 à 10 atomes de carbone, éventuellement substitué par des radicaux $R_1/R_2$;

où toutefois au moins l'un des radicaux $R_3$ à $R_6$ est OH;

$R' = R_1/R_2$;

$R'' = R_1/R_2$; de plus un aromatique, de préférence isocyclique à 6 à 10 atomes de carbone, éventuellement substitué par un ou plusieurs radicaux pris dans l'ensemble constitué par $R_1/R_2$, les radicaux O-hydrocarbonés saturés contenant de 1 à 8 atomes de carbone, OH, COOH, $CON\langle^{H}_{H'}$, $SO_3H$, $SO_2N\langle^{H}_{H}$ et $N\langle^{R^{III}}_{R^{IV}}$ ($R^{III}$, $R^{IV}$ = H ou un alkyle en $C_1$–$C_6$);

et

X = un anion monovalent quelconque ou un équivalent anionique correspondant.

2. Procédé selon la revendication 1, caractérisé en ce que $R_5$ et $R_6$ forment un noyau pyridine, $R_3$ étant H ou OH, et $R_4$ étant OH ou $N\langle^{R'}_{R''}$.

3. Procédé selon l'une quelconque des revendications 1 ou 2, caractérisé en ce que $R_1$ et $R_2$ sont un alkyle en $C_{1-4}$; $R_3$ est H ou OH; $R_4$ est OH, $N\langle^{R'}_{R''}$; $R_5$ est H ou OH; $R_6$ est OH ou un radical $NHSO_2$-aromatique isocyclique à 6 à 10 atomes de carbone éventuellement substitué par les radicaux $R_1/R_2$.

4. Procédé selon l'une quelconque des revendications 1 à 3, caractérisé en ce que les surfaces revêtues sont rincées à l'eau avant la polymérisation.

5. Composés de formule générale

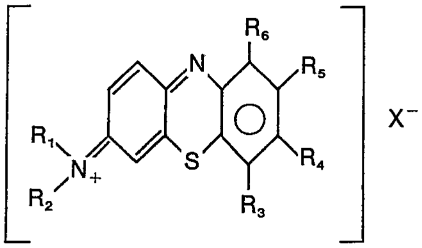

où $R_1$ à $R_6$ ont la signification donnée dans les revendications 1 à 3.

6. Agent pour le revêtement des éléments internes de réacteurs de polymérisation, pour supprimer la formation de dépôts sur les parois, caractérisé en ce qu'il contient des composés selon la revendication 5.

7. Réacteur de polymérisation, caractérisé en ce que ses parois internes et les autres éléments sur lesquels peuvent se former des dépôts de polymères sont pourvus en totalité ou en partie d'un revêtement contenant des composés selon les revendications 1 à 3.